# EUROPEAN PATENT APPLICATION

(11) **EP 2 963 490 A1**
(43) Date of publication of application: **06.01.2016**
(21) Application number: 15174038.8
(22) Date of filing: 26.06.2015
(51) Int. Cl.: G02F 1/225, G02B 27/01, G02B 6/293, G02B 26/10

(54) **IMAGE DISPLAY DEVICE AND HEAD-MOUNTED DISPLAY**

(30) Priority: 30.06.2014 JP 2014135099
(71) Applicant: Seiko Epson Corporation, Tokyo 163-0811 (JP)
(72) Inventor: Nishioka, Hiroki, Nagano, 392-8502 (JP)
(74) Representative: Hoffmann Eitle

(57) **Abstract**

An image display device includes: a signal light generation section including a light source section adapted to emit a light beam; a light scanner adapted to perform a scan with the light beam emitted by the light source section; and a switching section disposed between the light source section and the light scanner, and adapted to switch between a first state of making the light beam emitted by the light source section enter the light scanner, and a second state of preventing the light beam emitted by the light source section from entering the light scanner, wherein the switching section takes the first state in a case in which a voltage is applied to the switching section, and takes the second state in a case in which the voltage fails to be applied to the switching section.

## Description

### BACKGROUND

### 1. Technical Field

The present invention relates to an image display device and a head-mounted display.

### 2. Related Art

There has been known an image display device of performing scanning with a light beam to draw an image on an object (see, e.g., JP-A-2007-537465 (Document 1).

The image display device described in Document 1 has a light source for emitting a light beam, and a scanning section for performing a two-dimensional scan with the light beam emitted from the light source to project the image on the object. Among these constituents, the scanning section is provided with a mirror for reflecting the light beam, and a drive source for swinging the mirror. The light beam emitted from the light source is reflected by the mirror swung by the drive source. In such a manner as described above, the scanning section performs the scan with the light beam emitted from the light source, and the light beam with which the scan is performed is projected on the object as the image.

However, in the image display device described in Document 1, in the case in which unintended light beam is generated from the light source due to a malfunction or the like of a drive circuit of the light source, there is a possibility that the light beam is reflected by the mirror to reach the object (e.g., a retina).

### SUMMARY

An advantage of some aspects of the invention is to provide an image display device and a head-mounted display for reducing the possibility that unintended light beam enters the object in the case in which the unintended light beam is generated from the light source.

The invention can be implemented as the following aspects.

An image display device according to an aspect of the invention includes a light source section adapted to emit a light beam, a light scanner adapted to perform a scan with the light beam emitted by the light source section, and a switching section disposed between the light source section and the light scanner, and adapted to switch between a first state of making the light beam emitted by the light source section enter the light scanner, and a second state of preventing the light beam emitted by the light source section from entering the light scanner, and the switching section takes the first state in a case in which a voltage is applied to the switching section, and takes the second state in a case in which the voltage fails to be applied to the switching section.

According to this configuration, even in the case in which unintended light beam is generated from the light source due to a failure of the drive circuit of the light source, the light beam generated is prevented from passing through the switching section unless the voltage is intentionally applied to the switching section. Therefore, even in the case in which the light scanner stops, it is prevented that the eye of the user is irradiated with an excessive amount of light beam, and as a result, the image display device with the safety ensured can be obtained.

Further, since the external modulation can be performed on the intensity of the light beam to be emitted by the light source section at the switching section, the high-speed modulation becomes possible, and thus, increase in resolution of the image to be displayed can be achieved.

Further, since it becomes unnecessary to directly modulate the light source section, the light source section can be driven in the condition with high light emission stability. Therefore, it is possible to achieve stabilization of the operation of the image display device, and at the same time achieve an improvement of the quality of the image to be displayed.

In the image display device according to the aspect of the invention, it is preferable that the switching section includes an optical waveguide through which the light beam emitted by the light source section propagates.

According to this configuration, it is possible to improve the beam quality of the signal light beam propagating the switching section, and to dim the excessive signal light beam, and thus, it is possible to achieve a further improvement in image quality of the image to be displayed.

In the image display device according to the aspect of the invention, it is preferable that the switching section includes a modulation section adapted to modulate intensity of the light beam emitted by the light source section.

According to this configuration, since the intensity of the light beam can be modulated with a higher resolution in the switching section to thereby further increase the grayscale of the image to be displayed, a further improvement in image quality of the image to be displayed can be achieved.

In the image display device according to the aspect of the invention, it is preferable that the modulation section of the switching section modulates the intensity of the light beam using a fact that a refractive index of a region, through which the light beam is transmitted, varies in accordance with a voltage applied.

According to this configuration, since the modulation at high speed becomes possible, in particular, the contribution to the improvement in image quality of the image to be displayed is remarkable.

In the image display device according to the aspect of the invention, it is preferable that the switching section includes an optical waveguide through which the light beam emitted by the light source section propagates, and a modulation section adapted to modulate intensity of the light beam emitted by the light source section, and the optical waveguide and the modulation section are formed on a same substrate.

According to this configuration, it is possible to achieve miniaturization of the switching section, and thus, it is possible to achieve miniaturization of the image display device.

A head-mounted display according to another aspect of the invention includes a light source section adapted to emit a light beam, a light scanner adapted to perform a scan with the light beam emitted by the light source section, and a switching section disposed between the light source section and the light scanner, and adapted to switch between a first state of making the light beam emitted by the light source section enter the light scanner, and a second state of preventing the light beam emitted by the light source section from entering the light scanner, and the switching section takes the first state in a case in which a voltage is applied to the switching section, and takes the second state in a case in which the voltage fails to be applied to the switching section.

According to this configuration, even in the case in which unintended light beam is generated from the light source due to a failure of the drive circuit of the light source, the light beam generated is prevented from passing through the switching section unless the voltage is intentionally applied to the switching section. Therefore, even in the case in which the light scanner stops, it is prevented that the eye of the user is irradiated with an excessive amount of light beam, and as a result, the head-mounted display with the safety ensured can be obtained.

### BRIEF DESCRIPTION OF THE DRAWINGS

The invention will be described with reference to the accompanying drawings, wherein like numbers reference like elements.
Fig. 1 is a diagram showing a schematic configuration of an image display device according to a first embodiment (a head-mounted display) according to the invention.
Fig. 2 is a partial enlarged view of the image display device shown in Fig. 1.
Fig. 3 is a schematic configuration diagram of a signal generation section of the image display device shown in Fig. 1.
Fig. 4 is a diagram showing a schematic configuration of a light scanning section included in a scan light emitting section shown in Fig. 1.
Fig. 5 is a diagram for explaining an action of the light scanning section shown in Fig. 4.
Fig. 6 is a perspective view showing a schematic configuration of each of switching sections shown in Fig. 3.
Fig. 7 is a plan view of each of the switching sections shown in Fig. 6.
Figs. 8A and 8B are diagrams for explaining the action of each of the switching sections shown in Fig. 7.
Fig. 9 is a schematic configuration diagram of a signal generation section of an image display device according to a second embodiment of the invention.
Figs. 10A and 10B are diagrams for explaining an action of a switching section included in a signal generation section of an image display device according to a third embodiment of the invention.
Figs. 11A and 11B are diagrams for explaining an action of a switching section included in a signal generation section of an image display device according to a fourth embodiment of the invention.

### DESCRIPTION OF EXEMPLARY EMBODIMENTS

Hereinafter, an image display device and a head-mounted display according to the invention will be explained in detail based on some preferred embodiments shown in the accompanying drawings.

### Image Display Device

### First Embodiment

Firstly, an image display device according to a first embodiment of the invention will be explained.

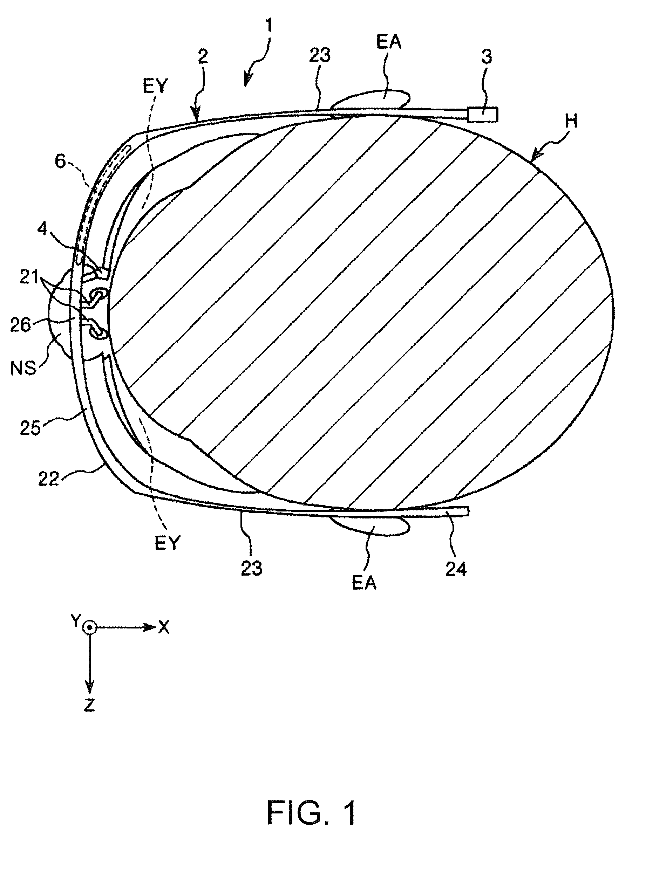

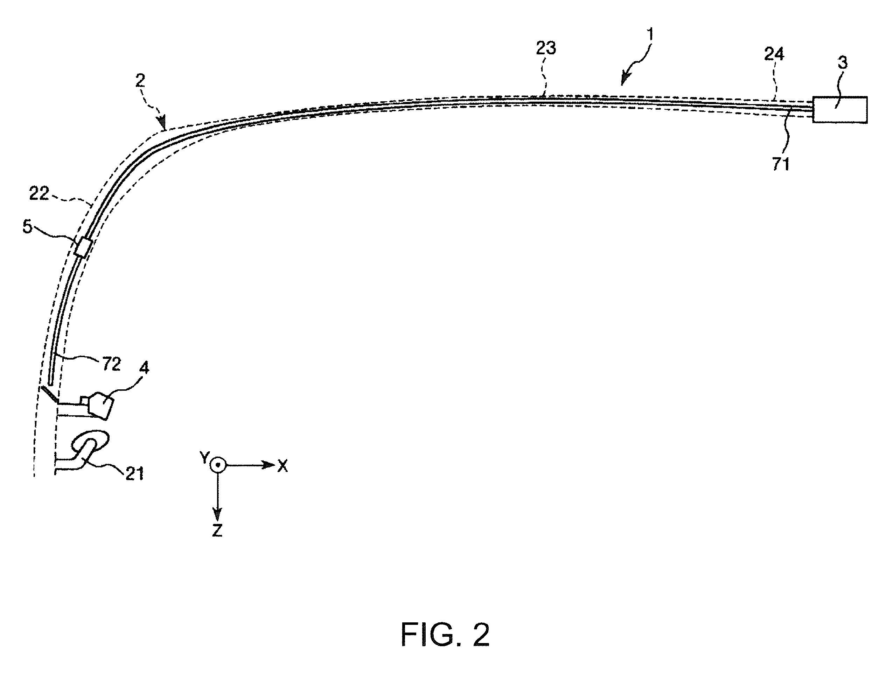

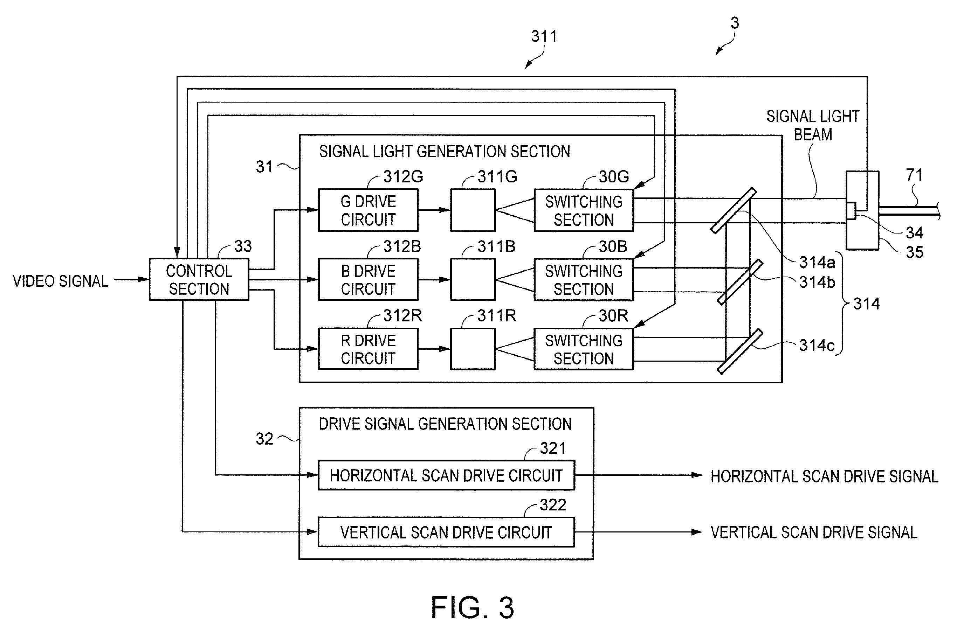

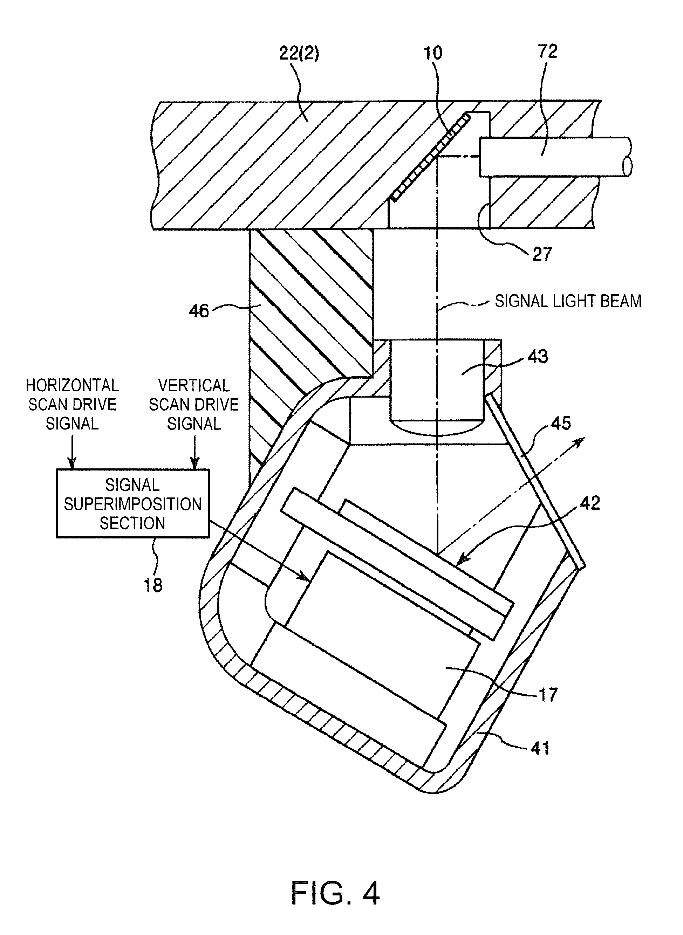

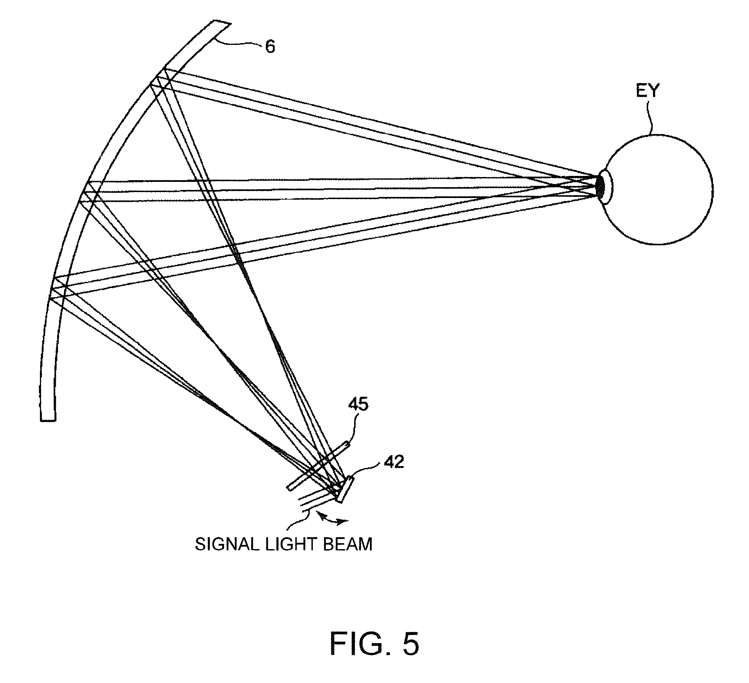

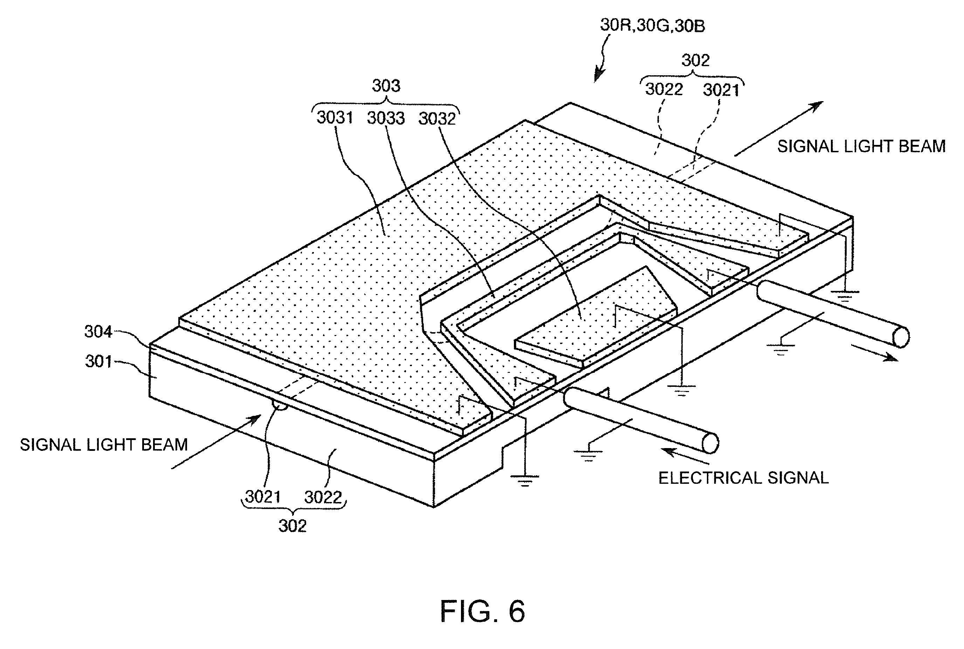

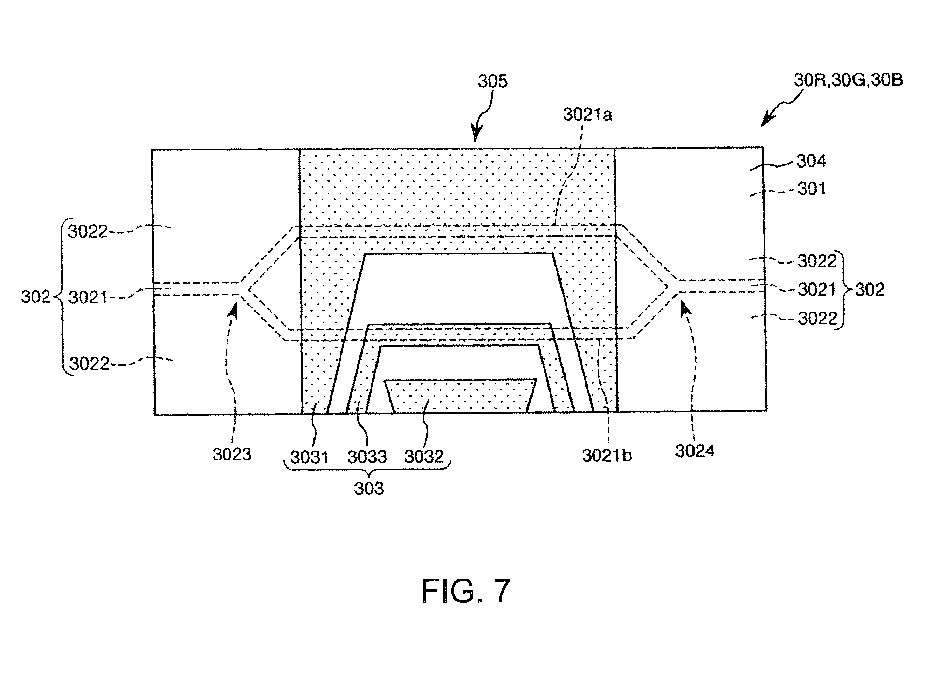

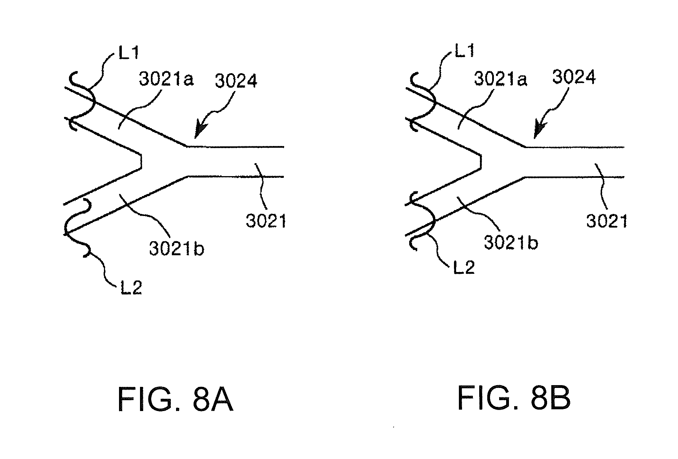

Fig. 1 is a diagram showing a schematic configuration of the image display device according to the first embodiment (a head-mounted display) according to the invention, and Fig. 2 is a partial enlarged view of the image display device shown in Fig. 1. Further, Fig. 3 is a schematic configuration diagram of a signal generation section of the image display device shown in Fig. 1, Fig. 4 is a diagram showing a schematic configuration of a light scanning section included in a scan light emitting section shown in Fig. 1, and Fig. 5 is a diagram for explaining an action of the light scanning section shown in Fig. 4. Further, Fig. 6 is a perspective view showing a schematic configuration of each of the switching sections shown in Fig. 3, Fig. 7 is a plan view of each of the switching sections shown in Fig. 6, and Figs. 8A and 8B are diagrams for explaining an action of each of the switching sections shown in Fig. 7. It should be noted that signal light beams L1, L2 shown in Figs. 8A and 8B each schematically show the waveform of the signal light beam.

Further, in Fig. 1, there are shown an X axis, a Y axis, and a Z axis as three axes perpendicular to each other, and the tip side of the arrow shown in the drawing is defined as "+ (plus)," and the base end side is defined as "- (minus) " for the sake of convenience of explanation. Further, a direction parallel to the X axis is referred to as an "X-axis direction," a direction parallel to the Y axis is referred to as a "Y-axis direction, " and a direction parallel to the Z axis is referred to as a "Z-axis direction."

Here, the X axis, the Y axis, and the Z axis are configured so that the Y-axis direction corresponds to a top-to-bottom direction of the head H, the Z-axis direction corresponds to a side-to-side direction of the head H, and the X-axis direction corresponds to a front-to-back direction of the head H when mounting the image display device 1 described later on the head H of the user.

As shown in Fig. 1, the image display device 1 is a head-mounted display (a head-mounted image display device) having an exterior appearance like a pair of spectacles, and is used while being mounted on the head H of the user, and allows the user to visually recognize an image by a virtual image in a state of overlapping the external image.

As shown in Fig 1, the image display device 1 is provided with a frame 2, a signal generation section 3, a scan light emitting section 4, and a reflecting section 6.

Further, as shown in Fig. 2, the image display device 1 is provided with a first optical fiber 71, a second optical fiber 72, and a connecting section 5.

In this image display device 1, the signal generation section 3 generates a signal light beam modulated in accordance with image information, the signal light beam is guided to the scan light emitting section 4 via the first optical fiber 71, the connection section 5, and the second optical fiber 72, the scan light emitting section 4 performs a two-dimensional scan with the signal light beam (a picture light beam) to emit a scan light beam, and the reflecting section 6 reflects the scan light beam toward the eye EY of the user. Thus, it is possible to allow the user to visually recognize a virtual image corresponding to the image information.

It should be noted that although in the description of the present embodiment, the case of disposing the signal generation section 3, the scan light emitting section 4, the connecting section 5, the reflecting section 6, the first optical fiber 71, and the second optical fiber 72 only on the right side to form only the virtual image for the right eye will be explained as an example, it is also possible to arrange that the left side of the frame 2 is configured similarly to the right side to form a virtual image for the left eye together with the virtual image for the right eye, or to form only the virtual image for the left eye.

Further, a device for optically connecting the signal generation section 3 and the scan light emitting section 4 to each other can be replaced with, for example, a device for achieving the connection via a variety of light guide bodies besides the device of achieving the connection via optical fibers. Further, it is not required to adopt the configuration in which the first optical fiber 71 and the second optical fiber 72 are connected to each other with the connection section 5, but the signal generation section 3 and the scan light emitting section 4 can optically be connected to each other only with the first optical fiber 71 without the connection section 5 intervening therebetween.

Hereinafter, each of the constituents of the image display device 1 will sequentially be explained in detail.

### Frame

As shown in Fig. 1, the frame 2 has a shape like a glassframe, and has a function of supporting the signal generation section 3 and the scan light emitting section 4.

Further, as shown in Fig. 1, the frame 2 includes a front section 22 for supporting the scan light emitting section 4 and a nose pad section 21, a pair of temple sections 23 connected to the front section 22 and respectively abutting on the ears of the user, and end cover sections 24 each of which is an end portion of the temple section 23 on the opposite side to the front section 22.

The nose pad section 21 abuts on the nose NS of the user in use to support the image display device 1 with respect to the head of the user. The front section 22 includes a rim section 25 and a bridge section 26.

The nose pad section 21 is configured so that the position of the frame 2 with respect to the user in use can be adjusted.

It should be noted that the shape of the frame 2 is not limited to what is shown in the drawings as long as the frame 2 can be mounted to the head H of the user.

### Signal Generation Section

As shown in Fig. 1, the signal generation section 3 (a light source section) is disposed in one (on the right side in the present embodiment) of the end cover sections 24 (the end portions of the respective temple sections 23 on the opposite side to the front section 22) of the frame 2 described above.

In other words, when used, the signal generation section 3 is disposed on the opposite side of the ear EA of the user to the eye EY. Thus, it is possible to make the weight balance of the image display device 1 excellent.

Such the signal generation section 3 has a function of generating the signal light beam with which the light scanning section 42 of the scan light emitting section 4 described later performs the scan, and a function of generating a drive signal for driving the light scanning section 42.

As shown in Fig. 3, such the signal generation section 3 is provided with switching sections 30R, 30G, and 30B, a signal light generation section 31, a drive signal generation section 32, a control section 33, a light detection section 34, and a fixation section 35.

The signal light generation section 31 is for generating the signal light beam with which the light scanning section 42 (a light scanner) of the scan light emitting section 4 described later performs the scan (a light scan).

The signal light generation section 31 has a plurality of light sources 311R, 311G, and 311B (a light source section) different in wavelength from each other, a plurality of drive circuits 312R, 312G, and 312B, and a light combining section (a combining section) 314.

The light source 311R (an R light source) is for emitting a red light beam, the light source 311G (a G light source) is for emitting a green light beam, and the light source 311B is for emitting a blue light beam (a B light source). By using such light beams of three colors, a full color image can be displayed.

Such light sources 311R, 311G, and 311B are not particularly limited, but laser diodes or LEDs, for example, can be used.

Such light sources 311R, 311G, and 311B are electrically connected to the drive circuits 312R, 312G, and 312B, respectively.

The drive circuit 312R has a function of driving the light source 311R described above, the drive circuit 312G has a function of driving the light source 311G described above, and the drive circuit 312B has a function of driving the light source 311B described above.

The three (three colors of) light beams respectively emitted from the light sources 311R, 311G, and 311B driven by such drive circuits 312R, 312G, and 312B enter the light combining section 314 via the switching sections 30R, 30G, and 30B, respectively.

Although not shown in the drawings, it is also possible to dispose lenses between the light sources 311R, 311G, and 311B and the switching sections 30R, 30G, and 30B, respectively. Thus, the light beams emitted from the light sources 311R, 311G, and 311B can be collimated or converged toward the switching sections 30R, 30G, and 30B, and the loss of the light beams entering the switching sections 30R, 30G, and 30B can be reduced.

Further, although not shown in the drawings, it is also possible to dispose collimator lenses between the switching sections 30R, 30G, and 30B and the light combining section 314. In particular in the case of making the light beams enter the switching sections 30R, 30G, and 30B, respectively, in a converged state, the light beams emitted from the switching sections 30R, 30G, and 30B become diverging light beams. Therefore, in the case of intending to treat the light beams in a collimated state in the posterior optical system, the collimator lenses are used. It should be noted that the components to be disposed in these places are not limited to the collimator lenses, but collecting lenses can also be used if it is intended that the light beams are converged to the posterior optical system.

The switching sections 30R, 30G, 30B shown in Fig. 6 are each provided with a substrate 301, an optical waveguide 302 provided to the substrate 301, electrodes 303 disposed on the substrate 301, and a buffer layer 304 intervening between the substrate 301 and the electrodes 303.

The substrate 301 forms a plate-like shape having a rectangular shape in a planar view, and is formed of a material having an electrooptic effect. The electrooptic effect is a phenomenon that the refractive index of a substance varies when applying an electrical field to the substance, and there can be cited the Pockels effect that the refractive index is proportional to the electrical field, and the Kerr effect that the refractive index is proportional to the square of the electrical field. In the case of providing the substrate 301 with the optical waveguide 302 branching in the middle thereof, and further applying an electrical field to the substrate 301, it is possible to vary the refractive index of one of the branches of the optical waveguide 302. By providing a phase difference between the light beams propagating the branches of the optical waveguide 302 using this phenomenon, and then making the light beams thus branched join each other again, it is possible to perform intensity modulation based on the phase difference.

As the material having the electrooptic effect, there can be cited, for example, inorganic materials such as lithium niobate (LiNbO₃), lithium tantalate (LiTaO₃), and lead lanthanum zirconate titanate (PLZT), and organic materials such as polythiophene, a liquid crystal material, a material obtained by doping charge transport molecules into an electro-optically active polymer, a material obtained by doping electrooptic pigments into a charge transport polymer, a material obtained by doping charge transport molecules and electrooptic pigments into an inactive polymer, and a material including a charge transport region and an electrooptic region in a main chain or a side chain of a polymer.

It is preferable for these materials to be used as a single crystal or a solid solution crystal. Thus, the substrate 301 is provided with a light transmissive property, and it becomes possible to form the optical waveguide 302 in the substrate 301.

The optical waveguide 302 can also be a separate member (e.g., an optical fiber or an optical waveguide made of glass or resin) from the substrate 301, but is the waveguide formed in the substrate 301 in the present embodiment. As the method of forming the optical waveguide 302 in the substrate 301, there can be cited, for example, a proton-exchange method and a Ti diffusion method. Among these methods, the proton-exchange method is a method of dipping the substrate in an acid solution, then making protons enter the substrate in exchange for elution of ions in the substrate to thereby change the refractive index of that area. According to this method, the optical waveguide 302 particularly superior in light resistance can be obtained. On the other hand, the Ti diffusion method is a method of depositing Ti on the substrate, and then performing a heating treatment to thereby diffuse Ti in the substrate to change the refractive index of that area.

The optical waveguide 302 formed in such a manner is constituted by a core section 3021 formed of an elongated region relatively high in refractive index out of the substrate 301, and a cladding section 3022 adjacent to the core section 3021 and relatively low in refractive index.

Further, the core section 3021 is formed so that the end portions are exposed on two short sides of the substrate 301. One of the two end portions forms an incident end of the light beam and the other of the two end portions forms an exit end of the light beam.

Further, the core section 3021 branches at a branch section 3023 located on the incident end side into two part, namely a first core portion 3021a and a second core portion 3021b. Further, the first core portion 3021a and the second core portion 3021b join each other again into one at a confluence section 3024 located on the exit end side of the core section 3021.

The electrodes 303 include ground electrodes 3031, 3032, and a signal electrode 3033.

Among the electrodes, the ground electrode 3031 is disposed so as to overlap the first core portion 3021a in the planar view of the substrate 301. Meanwhile, the ground electrode 3032 is disposed so as to overlap the cladding section 3022 located on the opposite side of the second core portion 3021b to the first core portion 3021a side. Further, the signal electrode 3033 is disposed so as to overlap at least a part of the second core portion 3021b.

The ground electrodes 3031, 3032 are each electrically grounded. Meanwhile, the signal electrode 3033 is provided with an electrical potential based on the electric signal so that an electrical potential difference (a voltage) occurs with the ground electrodes 3031, 3032. When the electrical potential difference occurs between the signal electrode 3033 and the ground electrodes 3031, 3032 as described above, an electrical field acts on the core section 3021 through which the line of electric force occurring therebetween passes. As a result, the refractive index of the core section 3021 varies based on the electrooptic effect.

Here, the signal electrode 3033 is configured to have a size equivalent to or slightly larger than the width of the second core portion 3021b. Therefore, the line of electric force is concentrated on the second core portion 3021b, and a stronger electrical field acts on the second core portion 3021b from the signal electrode 3033. In contrast, the widths of the ground electrodes 3031, 3032 are set to be sufficiently larger than the width of the first core portion 3021a. Therefore, the line of electric force is not significantly concentrated on the first core portion 3021a, and an only weak electric field acts on the first core portion 3021a from the ground electrode 3031.

Since there exists such a difference as described above between the first core portion 3021a and the second core portion 3021b, if such the electrical potential difference as described above occurs with respect to the electrodes 303, the refractive index of the second core portion 3021b located in accordance with the signal electrode 3033 mainly varies, but the refractive index of the first core portion 3021a hardly varies. As a result, a difference in refractive index occurs between the first core portion 3021a and the second core portion 3021b, and a phase difference based on the difference in refractive index occurs between the light beams respectively propagating through the first core portion 3021a and the second core portion 3021b. When the two signal light beams, between which the phase difference occurs in such a manner, join each other at the confluence section 3024, a multiplexed light beam attenuated with respect to the incident intensity is generated. The multiplexed light beam is emitted from the exit end toward the light combining section 314.

On this occasion, by controlling the electrical potential difference generated between the signal electrode 3033 and the ground electrodes 3031, 3032, the electrical phase difference between the signal light beam propagating through the first core portion 3021a and the signal light beam propagating through the second core portion 3021b can be controlled. Therefore, the attenuation width of the multiplexed light beam with respect to the incident intensity can be controlled.

It should be noted that although it is sufficient for the optical waveguide 302 to be located in a part corresponding at least to the electrodes 303 in view of the functions of the switching sections 30R, 30G, and 30B, by making the optical waveguide 302 extend also to a part other than the part corresponding to the electrodes 3 03, there can be obtained an additional advantages of, for example, improving the beam quality of the signal light beams and dimming the excessive signal light beams. Thus, a further improvement in image quality of the image to be displayed can be achieved.

Among these additional advantages, the former advantage is due to the fact that the signal light beam emitted from a light source section 311 is normally high in quality (narrow in distribution width of the wavelength) in the center portion in the cross-section thereof, but is low in quality in the outer portion, wherein the optical waveguide 302 mainly receives the center portion of the beam to easily remove the outer portion of the beam.

On the other hand, the latter advantage is due to the fact that the light quantity of the signal light beam can be reduced since a part of the light beam is leaked when the signal light beam propagates the optical waveguide 302.

The signal light beam controlled in the light intensity in such a manner is emitted from the switching sections 30R, 30G, and 30B, and then enters the light combining section 314.

The light combining section 314 is for combining the light beams from the plurality of switching sections 30R, 30G, and 30B with each other. Thus, it is possible to decrease the number of optical fibers for transmitting the signal light beam generated by the signal light generation section 31 to the scan light emitting section 4. Therefore, in the present embodiment, it is possible to transmit the signal light beam from the signal generation section 3 to the scan light emitting section 4 via a single light transmission path formed of the first optical fiber 71, the connection section 5, and the second optical fiber 72.

In the present embodiment, the light combining section 314 has three dichroic mirrors 314a, 314b, and 314c, and combines the light beams (the three colored light beams, namely the red light beam, the green light beam, and the blue light beam) emitted from the switching sections 30R, 30G, and 30B with each other to emit a single signal light beam. It should be noted that hereinafter the light sources 311R, 311G, and 311B are also referred to collectively as the "light source section 311."

It should be noted that the light combining section 314 is not limited to the configuration of using the dichroic mirrors described above, but can also be formed of, for example, prisms, optical waveguides, or optical fibers. In the case of configuring the light combining section 314 using the optical waveguides and the optical fibers, it is also possible to use a lens to be connected to the light combining section 314, and a collimator lens for collimating the light emitted from the light combining section 314.

The signal light beam generated by such a signal light generation section 31 enters one end portion of the first optical fiber 71. Then, such a signal light beam passes through the first optical fiber 71, the connection section 5, and the second optical fiber 72 in this order to be transmitted to the light scanning section 42 of the scan light emitting section 4 described later.

Here, in the vicinity of the end portion (hereinafter also referred to simply as "one end portion of the first optical fiber 71") of the first optical fiber 71 on the incident side of the signal light beam, there is disposed the light detection section 34. The light detection section 34 detects the signal light beam. Further, the one end portion of the first optical fiber 71 and the light detection section 34 are fixed to the fixation section 35.

The drive signal generation section 32 is for generating the drive signal for driving the light scanning section 42 (the light scanner) of the scan light emitting section 4 described later.

The drive signal generation section 32 has a drive circuit 321 (a first drive circuit) for generating a first drive signal used for the scan (horizontal scan) of the light scanning section 42 in a first direction and a drive circuit 322 (a second drive circuit) for generating a second drive signal used for the scan (vertical scan) of the light scanning section 42 in a second direction perpendicular to the first direction.

Such a drive signal generation section 32 is electrically connected to the light scanning section 42 of the scan light emitting section 4 via signal lines not shown. Thus, the drive signals (the first drive signal and the second drive signal) generated in the drive signal generation section 32 are input to the light scanning section 42 of the scan light emitting section 4 described later.

The drive circuits 312R, 312G, and 312B of the signal light generation section 31 and the drive circuits 321, 322 of the drive signal generation section 32 described above are electrically connected to the control section 33.

The control section 33 has a function of controlling the drive of the drive circuits 312R, 312G, and 312B of the signal light generation section 31 and the drive circuits 321, 322 of the drive signal generation section 32 based on the video signal (image signal). In other words, the control section 33 has a function of controlling the drive of the scan light emitting section 4. Thus, the signal light generation section 31 generates the signal light beam modulated in accordance with the image information, and at the same time, the drive signal generation section 32 generates the drive signal corresponding to the image information.

Further, the control section 33 is configured so as to be able to control the drive of the drive circuits 312R, 312G, and 312B of the signal light generation section 31 based on the intensity of the light beam detected by the light detection section 34.

Further, the control section 33 has a function of controlling the action of the switching sections 30R, 30G, and 30B based on the video signal. Thus, the signal light generation section 31 is capable of varying the intensity of each of the three colored light beams in accordance with the image information, and of generating the signal light beam on which the intensity modulation is performed in accordance with the image information.

Incidentally, the switching sections 30R, 30G, and 30B having such a configuration as described above become to be able to switch between a "first state" of making the signal light beam propagate through the optical waveguide 302 to be emitted from the exit end, and a "second state" of attenuating the signal light beam propagating through the optical waveguide 302 to be prevented from being output from the exit end by appropriately controlling the voltage to be applied to the electrodes 303.

Further, the switching sections 30R, 30G, and 30B related to the present embodiment are configured so as to be set to the first state when the voltage is applied to the electrodes 303, and to be set to the second state when the voltage is not applied to the electrodes 303.

Therefore, according to such switching sections 30R, 30G, and 30B, in the case in which the voltage is not applied to the electrodes 303, the signal light beam propagating through the optical waveguide 302 is attenuated and is not emitted from the exit end, and therefore, does not reach the eye EY of the user. Therefore, in the case in which the voltage is not applied to the electrodes 303, it is prevented that the eye EY of the user is irradiated with an unintended signal light beam, and it is possible to prevent the eye EY from leading to a failure.

Here, as the case in which the voltage is not applied to the electrodes 303, there can be cited the case in which, for example, some failure occurs in the control section 33, and the voltage fails to be applied at the timing at which the voltage should normally be applied in addition to the case in which the voltage is intentionally prevented from being applied in the state of being controlled by the control section 33. Most of the cases in which a failure occurs in the control section 33 can be caused by the state in which the control section 33 fails to be energized. In such cases, there is a high probability that the failure that the control section 33 fails to apply the voltage to the electrodes 303.

In light of such circumstances, the switching sections 30R, 30G, and 30B related to the present embodiment are configured so as to be able to take the second state described above in the case in which the voltage is not applied to the electrodes 303. According to such switching sections 30R, 30G, and 30B, even in the case in which some failure occurs in the control section 33, the unintended signal light beam is prevented from passing through the switching sections 30R, 30G, and 30B. Therefore, even if the light scanning section 42 stops without intention, and the state in which the light beam can be reflected toward the eye EY lasts for a long period of time, it is prevented that the eye EY is irradiated with an excessive light amount of signal light beam. As a result, safety of the image display device 1 can be ensured.

As the switching sections 30R, 30G, and 30B which can take the second state if the voltage is not applied to the electrodes 303 as described above, in the present embodiment, there are adopted those configured so that the phase of the signal light beam L1 propagating through the first core portion 3021a and the phase of the signal light beam L2 propagating through the second core portion 3021b are shifted as much as a half wavelength from each other in the confluence section 3024 as shown in Fig. 8A in the case in which the voltage is not applied to the electrodes 303, namely in the case in which a change in refractive index is not caused in the optical waveguide 302. In the case in which the phase of the signal light beam L1 and the phase of the signal light beam L2 are shifted as much as a half wavelength from each other, the signal light bean L1 and the signal light beam L2 cancel out each other, and the light intensity becomes substantially zero. As a result, the switching sections 30R, 30G, and 30B become to be able to take the "second state" in which the signal light beam propagating through the optical waveguide 302 is prevented from being emitted from the exit end in the case in which the voltage is not applied to the electrodes 303.

In contrast, when the voltage is applied to the electrodes 303, the refractive index of the second core portion 3021b varies and the optical path length varies. Thus, the phase of the signal light beam L2 propagating through the second core portion 3021b varies. On this occasion, by controlling the variation width of the phase by appropriately changing the voltage, it is possible to make the phase of the signal light beam L1 and the phase of the signal light beam L2 coincide with each other as shown in Fig. 8B. As a result, the multiplexed light beam obtained by multiplexing the signal light beam L1 and the signal light beam L2 with each other at the confluence section 3024 is emitted from the exit end while being hardly attenuated compared to the incident intensity. Therefore, the switching sections 30R, 30G, and 30B become to be able to take the "first state" in which the signal light beam propagating through the optical waveguide 302 is emitted from the exit end in the case in which the voltage is applied to the electrodes 303. Therefore, by energizing the switching sections 30R, 30G, and 30B, it is possible for the image display device 1 to display the image.

It should be noted that in order to shift the phase of the signal light beam L1 propagating through the first core portion 3021a and the phase of the signal light beam L2 propagating through the second core portion 3021b from each other as much as a half wavelength at the confluence section 3024 when the voltage is not applied to the electrodes 303, it is sufficient to arrange that, for example, the optical path length (the optical distance) of the first core portion 3021a and the optical path length (the optical distance) of the second core portion 3021b are shifted as much as a half wavelength from each other. Further, when the voltage is not applied to the electrodes 303, in the case in which the refractive index of the optical waveguide 302 is homogenized, it is sufficient to shift the physical distance of the first core portion 3021a and the physical distance of the second core portion 3021b from each other as much as a half wavelength.

Further, according to the image display device 1 related to the present embodiment, it is possible to perform external modulation on the intensity of the three colors of signal light beams respectively in the switching sections 30R, 30G, and 30B. In other words, the switching sections 30R, 30G, and 30B are each provided with a modulation section 305 for performing the external modulation on the intensity of the signal light beam. Therefore, high-speed modulation becomes possible compared to the case in which the intensity of each of the three colors of signal light beams emitted from the light source section 311 is directly modulated. In addition, by varying the voltage to be applied to the electrodes 303, it is possible to control the intensity of the signal light beam with higher resolution based on a predetermined correlative relationship in the switching sections 30R, 30G, and 30B. As a result, the grayscale of the image to be drawn on the retina of the eye EY can further be increased, and thus, a further improvement in resolution can be achieved.

Further, in the present embodiment, since it is unnecessary to directly modulate the light source section 311, it is sufficient to drive the light source section 311 so that the signal light beam having constant intensity can be emitted. Therefore, it is possible to drive the light source section 311 in the condition in which the emission efficiency is the highest or the condition in which the emission stability is the highest, and it is possible to achieve reduction of power consumption of the image display device 1 or to achieve stabilization of the operation of the image display device 1, and at the same time, achieve an improvement of the image quality of the image to be drawn on the retina of the eye EY.

It should be noted that the "second state" described above includes the state of allowing emission of the signal light beam so weak that no problem is posed if the retina is irradiated with the signal light beam for a long period of time besides the state of completely preventing the signal light beam from being emitted from the exit end of the optical waveguide 302.

Further, as described above, the optical waveguide 302 and the modulation section 305 are formed on the same substrate 301. Therefore, miniaturization of the switching sections 30R, 30G, and 30B can be achieved compared to the case of forming the optical waveguide 302 and the modulation section 305 as members separate from each other. As a result, the miniaturization of the image display device 1 can be achieved. Further, since the reduction of an optical coupling loss between the optical waveguide 302 and the modulation section 305 can be achieved, the attenuation of the signal light beam in the switching sections 30R, 30G, and 30B can be suppressed. Thus, the improvement of the image quality of the image to be drawn on the retina of the eye EY can be achieved.

It should be noted that although in the signal generation section 3 described above, the switching sections 30R, 30G, and 30B are disposed between the light sources 311R, 311G, and 311B and the dichroic mirrors 314a, 314b, and 314c, respectively, the arrangement of the switching sections 30R, 30G, and 30B is not limited to this example.

Further, although in the switching sections 30R, 30G, and 30B described above, the external modulation is performed on the intensity of the signal light beam using the electrooptic effect, it is also possible to adopt the switching sections using a light modulation effect such as an acoustooptic effect, a magnetooptic effect, a thermooptic effect, or a nonlinear optical effect instead of the electrooptic effect. In the variety of types of effects described above, since the principle of eventually modulating the intensity of the light beam in accordance with the application of the voltage is used, the functions and the advantages described above can also be obtained.

It should be noted that in the case of using the electrooptic effect, since the modulation at high speed becomes possible, in particular, the contribution to the improvement in image quality of the image to be displayed is remarkable.

Further, the buffer layer 304 is disposed between the substrate 301 and the electrodes 303, and is formed of, for example, silicon oxide or the like.

### Scan Light Emitting Section

As shown in Figs. 1 and 2, the scan light emitting section 4 is attached to the vicinity of the bridge section 26 of the frame 2 described above (in other words, the vicinity of the center of the front section 22).

As shown in Fig. 4, such a scan light emitting section 4 is provided with a housing 41 (chassis), the light scanning section 42, a lens 43 (coupling lens), a lens 45 (collecting lens), and a support member 46.

The housing 41 is attached to the front section 22 via the support member 46.

Further, an exterior surface of the housing 41 is bonded to an opposite side part of the support member 46 to the frame 2.

The housing 41 supports the light scanning section 42, and at the same time houses the light scanning section 42. Further, the lenses 43, 45 are attached to the housing 41, and the lenses 43, 45 constitute a part (a part of a wall section) of the housing 41.

Further, the lens 43 (a window section of the housing 41 for transmitting the signal light beam) is separated from the second optical fiber 72. In the present embodiment, the end portion of the second optical fiber 72 on the exit side of the signal light beam is located at the position opposed to a reflecting section 10 provided to the front section 22 of the frame 2, and separated from the scan light emitting section 4.

The reflecting section 10 has a function of reflecting the signal light beam, which is emitted from the second optical fiber 72, toward the light scanning section 42. Further, the reflecting section 10 is disposed in a recessed section 27 opening inside the front section 22. It should be noted that the opening of the recessed section 27 can also be covered with a window section formed of a transparent material. Further, the reflecting section 10 is not particularly limited providing the signal light beam can be reflected, and can be formed of, for example, a mirror or a prism.

The light scanning section 42 is a light scanner for performing a two-dimensional scan with the signal light beam from the signal light generation section 31. The scan light is formed by the light scanning section 42 performing the scan with the signal light beam. Specifically, the signal light beam having been emitted from the second optical fiber 72 enters a light reflecting surface of the light scanning section 42 via the lens 43. Then, by driving the light scanning section 42 in accordance with the drive signal generated by the drive signal generation section 32, a two-dimensional scanning motion of the signal light beam is achieved.

Further, the light scanning section 42 has a coil 17 and a signal superimposition section 18 (see Fig. 4), and the coil 17, the signal superimposition section 18, and the drive signal generation section 32 constitute a drive section for driving the light scanning section 42.

The lens 43 has a function of controlling the spot diameter of the signal light beam emitted from the second optical fiber 72. Further, the lens 43 also has a function of adjusting the radiation angle of the signal light beam emitted from the second optical fiber 72 to roughly collimate the signal light beam.

The signal light beam (the scan light) moved by the light scanning section 42 to achieve the scan is emitted to the outside of the housing via the lens 45.

It should be noted that the scan light emitting section 4 can also be provided with a plurality of light scanning sections for moving the signal light beam to achieve a one-dimensional scan instead of the light scanning section 42 for moving the signal light beam to achieve the two-dimensional scan.

### Reflecting Section

As shown in Figs. 1 and 2, the reflecting section 6 (a reflecting optical section) is attached to the rim section 25 included in the front section 22 of the frame 2 described above.

Specifically, the reflecting section 6 is disposed so as to be located in front of the eye EY of the user and on the far side of the light scanning section 42 with respect to the user when used. Thus, it is possible to prevent a part projecting forward to the face of the user from being provided to the image display device 1.

As shown in Fig. 5, the reflecting section 6 has a function of reflecting the signal light beam from the light scanning section 42 toward the eye EY of the user.

In present embodiment, the reflecting section 6 is a half mirror (a semitransparent mirror), and also has a function (a light transmissive property with respect to the visible light) of transmitting the external light. Specifically, the reflecting section 6 has a function (a combiner function) of reflecting the signal light beam (the picture light beam) from the light scanning section 42 and at the same time transmitting the external light beam proceeding from the outside of the reflecting section 6 toward the eye of the user when used. Thus, it is possible for the user to visually recognize the virtual image (the image) formed by the signal light beam while visually recognizing an external image. In other words, a see-through head-mounted display can be realized.

Further, the surface of the reflecting section 6 located on the user side forms a concave reflecting surface. Therefore, the signal light beam reflected by the reflecting section 6 converges on the user side. Therefore, it becomes possible for the user to visually recognize the virtual image enlarged to be larger than the image formed on the concave surface of the reflecting section 6. Thus, the visibility of the user can be enhanced.

In contrast, a surface of the reflecting section 6 located on the far side from the user forms a convex surface having roughly the same curvature as the concave surface described above. Therefore, the external light beam reaches the eye of the user without being significantly deflected by the reflecting section 6. Therefore, it is possible for the user to visually recognize the external image with little distortion.

It should be noted that it is also possible for the reflecting section 6 to have, for example, a diffraction grating. In this case, it is possible to provide a variety of optical characteristics to the diffraction grating to thereby reduce the number of components of the optical system, or to thereby enhance the design flexibility. For example, by using a hologram element as the diffraction grating, it is possible to control the emission direction of the signal light beam reflected by the reflecting section 6, or to select the wavelength of the signal light beam to be reflected. Further, by providing the diffraction grating with a lens effect, it is possible to control the focusing state of the entire scan light formed of the signal light beam reflected by the reflecting section 6, or to correct the aberration caused when the signal light beam is reflected by the concave surface.

Further, the reflecting section 6 can be obtained by forming a semi-transmissive reflecting film formed of a metal thin film, a dielectric multilayer film, or the like on a transparent substrate, and a polarization beam splitter can also be used as the reflecting section 6. In the case of using the polarization beam splitter, it is sufficient to adopt a configuration in which the signal light beam from the light scanning section 42 becomes a polarized light beam, and to adopt a configuration of reflecting the polarized light beam corresponding to the signal light beam from the light scanning section 42.

### First Optical Fiber, Light Detection Section, and Fixation Section

The fixation section 35 has a function of fixing the one end portion of the first optical fiber 71 at the position where the intensity of the light beam input from the light source section 311 to the first optical fiber 71 is higher than 0 and lower than a predetermined value. Thus, it is possible to decrease the intensity of the light beam input from the light source section 311 to the first optical fiber 71.

Further, the fixation section 35 also has a function of fixing the light detection section 34. Thus, a remaining part failing to enter the first optical fiber 71 out of the light beam (the signal light beam) emitted from the light source section 311 can efficiently be used for the detection in the light detection section 34. Further, it is possible to fix

(maintain constant) a positional relationship between the one end portion of the first optical fiber 71 and the light detection section 34.

The light detection section 34 fixed by the fixation section 35 in such a manner is capable of detecting the intensity of the light beam emitted without providing an optical system for branching the signal light beam emitted from the light sources 311B, 311G, and 311R. Further, it is possible for the control section 33 to control the intensity of the light beam emitted from the light sources 311B, 311G, and 311R based on the intensity of the light beam detected by the light detection section 34.

It is not necessary to provide such a fixation section 35 as described above, but it is possible to adopt a configuration of connecting the light beam, which is emitted from the light source section 311, to the optical fiber 71 without intentionally dimming the light beam. Further, it is not necessary to provide the light detection section 34 to the fixation section 35, and the position of the light detection section 34 is not particularly limited providing the light quantity of the light source section 311 can be detected at the position.

It should be noted that the image display device according to the embodiment of the invention is not limited to the embodiment such as the head-mounted display described above having the display principle of the retina scanning system. Specifically, the image display device according to the embodiment of the invention can also be a device having a display principle other than the retina scanning system such as a head-up display, a laser projector, or a laser television. According also to such display principles, since there is a possibility that the reflected light beam indirectly and incidentally enters the retina, substantially the same function and advantage as those of the retina scanning system can be expected using the invention.

### Second Embodiment

Then, an image display device according to a second embodiment of the invention will be explained.

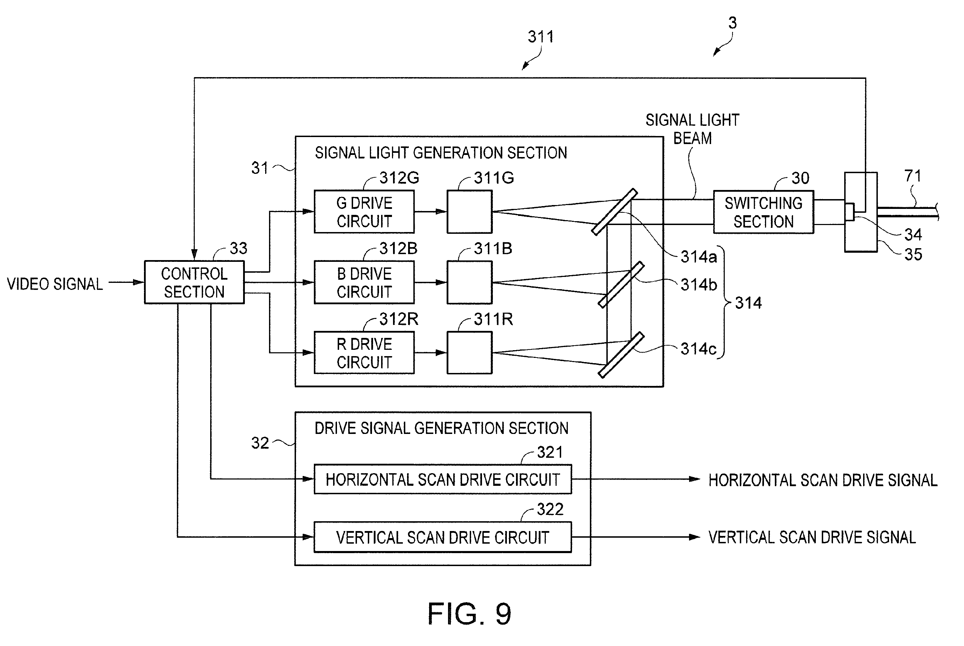

Fig. 9 is a schematic configuration diagram of a signal generation section of the image display device according to the second embodiment of the invention.

Hereinafter, the second embodiment will be described. The following explanation is focused mainly on the differences from the first embodiment described above, and the explanation of substantially the same matters will be omitted. Further, in the drawings, the constituents substantially identical to those of the embodiment described above are denoted with the same reference symbols.

The signal generation section 3 related to the second embodiment is substantially the same as the signal generation section 3 related to the first embodiment except the point that the arrangement of the switching sections 30 is different.

Specifically, in the first embodiment, the switching sections 30R, 30G, and 30B are disposed nearer to the light sources 311R, 311G, and 311B than the light combining section 314 for combining the three colors of signal light beams as shown in Fig. 3 on the one hand, and on the other hand, in the present embodiment, the switching section 30 is disposed nearer to the exit side (the opposite side to the light sources 311R, 311G, and 311B) than the light combining section 314 as shown in Fig. 9. According to the present embodiment having such a configuration, since it is necessary to dispose the single switching section 30, it is possible to achieve simplification of the structure of the signal generation section 3.

Although not shown in the drawings, it is also possible to dispose collimator lenses or collecting lenses between the light sources 311R, 311G, and 311B and the light combining section 314. Further, it is also possible to dispose a collimator lens or a collecting lens between the light combining section 314 and the switching section 30. Further, although not shown in the drawing, it is also possible to dispose a collimator lens for collimating the light beam emitted from the switching section 30, or a coupling lens for coupling the light beam, which is emitted from the switching section 30, to the optical fiber 71.

It should be noted that in this case, since the intensity modulation of the signal light beam is performed color by color, it is sufficient to exclusively (in a time sharing manner) drive the light sources 311R, 311G, and 311B from each other. Further, it is sufficient to control the operation of the switching section 30 in sync with the drive. Thus, since the intensity modulation of the signal light beam can be performed color by color in a time sharing manner, a full-color image can be generated.

According also to such a second embodiment, there can be obtained substantially the same advantage, namely the advantage that even in the case in which some failure occurs in the control section 33, it is prevented that the eye EY of the user is irradiated with the signal light beam with unintended light intensity, and thus, the safety of the image display device 1 is ensured.

### Third Embodiment

Then, an image display device according to a third embodiment of the invention will be explained.

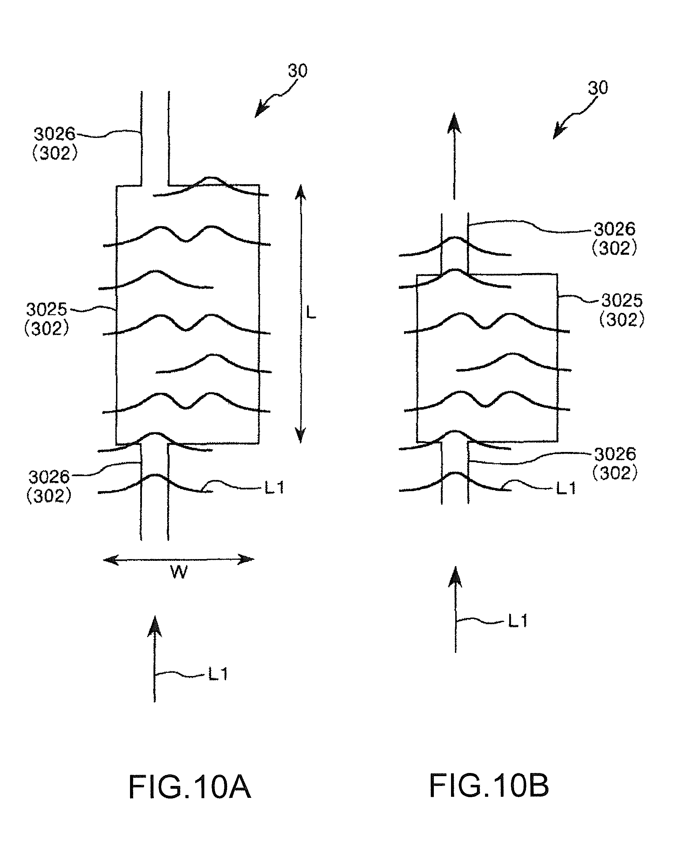

Figs. 10A and 10B are diagrams for explaining an action of a switching section included in a signal generation section of the image display device according to the third embodiment of the invention. It should be noted that the signal light beam L1 shown in Figs. 10A and 10B schematically shows the waveform of the signal light beam.

Hereinafter, the third embodiment will be described. The following explanation is focused mainly on the differences from the first embodiment described above, and the explanation of substantially the same matters will be omitted. Further, in the drawings, the constituents substantially identical to those of the embodiments described above are denoted with the same reference symbols.

The signal generation section 3 related to the third embodiment is substantially the same as the signal generation section 3 related to the first embodiment except the point that the structure of the switching sections 30 is different.

Specifically, in the third embodiment, there is used the switching section 30 for controlling the presence or absence of modal interference of the light beam by applying a voltage, and capable of taking the second state described above in the case in which the voltage is not applied. Hereinafter, the principle of the action of the switching section 30 related to the present embodiment will be explained.

The switching section 30 shown in Figs. 10A and 10B is provided with the optical waveguide 302 disposed so as to extend throughout the entire switching section 30 in the longitudinal direction similarly to the first embodiment. The optical waveguide 302 is provided with a broadened portion 3025 obtained by partially broaden the optical waveguide 302 in the middle, and non-broadened portions 3026 disposed on the both sides of the broadened portion 3025. The non-broadened portions 3026 are each configured to be smaller in width than the broadened portion 3025. In such a broadened portion 3025, when, for example, the signal light beam L1 propagating in a single mode through the non-broadened portion 3026 enters the broadened portion 3025, the propagation mode of the signal light beam L1 is separated into a plurality of modes (multi mode). In order to make the signal light beam propagate through the broadened portion 3025 in the state of being separated into the plurality of modes in such a manner, and then enter the optical waveguide 302 again, it is sufficient to optimize the refractive index, the length L, and the width W of the broadened portion 3025 so that the plurality of modes is combined with each other with respect to the connection section between the broadened portion 3025 and the non-broadened portion 3026 located on the exit side.

Since it is not easy to change the length L and the width W of the broadened portion 3025, it is preferable to appropriately vary the refractive index of the broadened portion 3025 to thereby vary the separation state (the phase difference between the modes) of the mode of the signal light beam L propagating through the broadened portion 3025. Then, by varying the refractive index of the broadened portion 3025 so that the plurality of modes is combined with respect to the connection section between the broadened portion 3025 and the non-broadened portion 3026 located on the exit side, it is possible to make the light beam with sufficient intensity propagate to the non-broadened portion 3026 located on the exit side. As a result, it is possible to achieve the "first state" described above, namely the state in which the emission light beam is made to propagate toward the non-broadened portion 3026 located on the exit side when the voltage is applied to the broadened portion 3025 via an electrode not shown in the drawings (see Fig. 10B).

As the method of varying the refractive index of the broadened portion 3025, it is possible to use a method of making use of, for example, an electrooptic effect, an acoustooptic effect, a magnetooptic effect, a thermooptic effect, and a non-linear optical effect. For example, in the case of making use of the electrooptic effect, it is sufficient to use a material having the electrooptic effect as the constituent material of the broadened portion 3025. Then, by applying the voltage to the broadened portion 3025 via an electrode not shown in the drawings, the refractive index of the broadened portion 3025 can be varied.

In contrast, in the switching section 30 shown in Fig. 10A, the constituent material, the length L, and the width W of the broadened portion 3025 are set in advance so that the plurality of modes does not interfere with each other in the connection section between the broadened portion 3025 and the non-broadened portion 3026 located on the exit side in the state in which the voltage is not applied to the broadened portion 3025. According to such a configuration, it is possible to achieve the "second state" described above, namely the state in which the emission light beam is made to hardly propagate toward the non-broadened portion 3026 located on the exit side when the voltage is not applied to the broadened portion 3025 (see Fig. 10A).

According also to such a third embodiment, there can be obtained substantially the same advantage, namely the advantage that even in the case in which some failure occurs in the control section 33, it is prevented that the eye EY of the user is irradiated with the signal light beam with unintended light intensity, and thus, the safety of the image display device 1 is ensured.

### Fourth Embodiment

Then, an image display device according to a fourth embodiment of the invention will be explained.

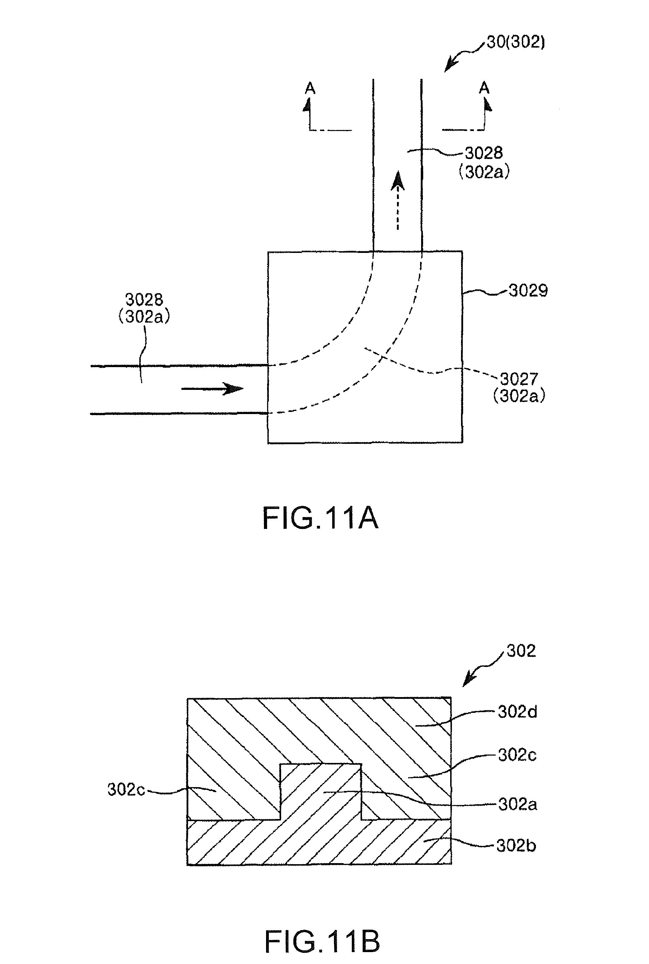

Figs. 11A and 11B are diagrams for explaining an action of a switching section included in a signal generation section of the image display device according to the fourth embodiment of the invention.

Hereinafter, the fourth embodiment will be described. The following explanation is focused mainly on the differences from the first embodiment described above, and the explanation of substantially the same matters will be omitted. Further, in the drawings, the constituents substantially identical to those of the embodiments described above are denoted with the same reference symbols.

The signal generation section 3 related to the first embodiment is substantially the same as the signal generation section 3 related to the first embodiment except the point that the structure of the switching sections 30 is different.

Specifically, in the fourth embodiment, there is used the switching section 30 for controlling the difference in refractive index between the core section and the cladding section of the optical waveguide 302 by applying a voltage, and capable of taking the second state described above in the case in which the voltage is not applied. Hereinafter, the principle of the action of the switching section 30 related to the present embodiment will be explained.

The switching section 30 shown in Figs. 11A and 11B is provided with the optical waveguide 302 similarly to the first embodiment. As shown in Fig. 11A, the optical waveguide 302 is provided with a curved portion 3027 formed by partially curving the optical waveguide 302 in the middle, straight portions 3028 disposed on both sides in the longitudinal direction of the curved portion 3027, and an electrode 3029 provided to the curved portion 3027. In the optical waveguide 302 provided with such a curved portion 3027, the action is classified into two cases in accordance with the difference in refractive index between the core section and the cladding section, namely the case in which the signal light beam propagating propagates while curving along the curved shape of the core section in the curved portion 3027, and the case in which the signal light beam does not curve and is leaked to the cladding section. By setting the different in refractive index to be sufficiently large, it is possible to make the signal light beam propagate while suppressing the leakage of the signal light beam even if the curvature radius of the curved portion 3027 is set to a small value (the curvature is set to a large value). In contrast, by setting the difference in refractive index to a small value, the action of confining the signal light beam in the core section of the curved portion 3027 is suppressed, and therefore, it becomes easy for the signal light beam to be leaked, and it becomes unachievable to make the signal light beam propagate to the exit end.

Fig. 11B is a cross-sectional view along the A-A line shown in Fig. 11A. The optical waveguide 302 shown in Figs. 11A and 11B includes a core section 302a, a lower cladding section 302b located below the core section 302a, a side cladding section 302c located lateral to the core section 302a, and an upper cladding section 302d located above the core section 302a. Among these sections, the core section 302a and the lower cladding section 302b are formed integrally with each other with a light transmissive material. In contrast, the side cladding section 302c and the upper cladding section 302d are formed integrally with each other with a material varying in refractive index in accordance with the voltage applied.

As the material varying in refractive index in accordance with the voltage applied, there can be cited, for example, a material having an electrooptic effect, a material having an acoustooptic effect, a material having a magnetooptic effect, a material having a thermooptic effect, and a material having a non-linear optical effect.

In the switching section 30 related to the present embodiment, the constituent materials of the respective sections are selected so that the difference in refractive index between the core section 302a of the curved portion 3027 and the cladding section becomes small in the case in which the voltage is not applied to the electrode 3029. Thus, although the signal light beam can propagate through the straight portions 3028, the propagation condition is not achieved in the curved portion 3027, and therefore, the signal light beam is leaked to the cladding section. As a result, the signal light beam fails to propagate to the exit end of the optical waveguide 302, and thus, the "second state" described above can be achieved.

It should be noted that the range of the difference in refractive index between the core section 302a and the cladding section at this moment can be calculated based on the curvature radius and the total reflection condition in the curved portion 3027.

Meanwhile, when the voltage is applied to the electrode 3029 of the switching section 30 shown in Fig. 11A, the refractive index of the side cladding section 302c and the upper cladding section 302d varies. Thus, the difference in refractive index between the core section 302a, and the side cladding section 302c and the upper cladding section 302d becomes sufficiently large, and the signal light beam propagates while curving along the curved shape of the core section in the curved portion 3027. As a result, the signal light beam propagates to the exit end of the optical waveguide 302, and thus, the "first state" described above can be achieved.

According also to such a fourth embodiment, there can be obtained substantially the same advantage, namely the advantage that even in the case in which some failure occurs in the control section 33, it is prevented that the eye EY of the user is irradiated with the signal light beam with unintended light intensity, and thus, the safety of the image display device 1 is ensured.

Although the image display device and the head-mounted display according to the invention are explained hereinabove based on the illustrated embodiments, the invention is not limited to these embodiments.

For example, in the image display device according to the invention, the configuration of each section can be replaced with an arbitrary configuration exerting substantially the same function, and further, it is also possible to add an arbitrary configuration.

Further, the reflecting section can also be provided with a planar reflecting surface.

Further, the image display device according to another embodiment of the invention can also be a combination of any two or more of the embodiments described above.

## Claims

1. An image display device comprising:
a light source section adapted to emit a light beam;
a light scanner adapted to perform a scan with the light beam emitted by the light source section; and
a switching section disposed between the light source section and the light scanner, and adapted to switch between a first state of making the light beam emitted by the light source section enter the light scanner, and a second state of preventing the light beam emitted by the light source section from entering the light scanner,
wherein the switching section takes the first state in a case in which a voltage is applied to the switching section, and takes the second state in a case in which the voltage fails to be applied to the switching section.

2. The image display device according to Claim 1, wherein
the switching section includes an optical waveguide through which the light beam emitted by the light source section propagates.

3. The image display device according to Claim 1 or 2, wherein
the switching section includes a modulation section adapted to modulate intensity of the light beam emitted by the light source section.

4. The image display device according to Claim 3, wherein
the modulation section of the switching section modulates the intensity of the light beam using a fact that a refractive index of a region, through which the light beam is transmitted, varies in accordance with a voltage applied.

5. The image display device according to Claim 1, wherein
the switching section includes
an optical waveguide through which the light beam emitted by the light source section propagates, and
a modulation section adapted to modulate intensity of the light beam emitted by the light source section, and
the optical waveguide and the modulation section are formed on a same substrate.

6. A head-mounted display comprising:
a light source section adapted to emit a light beam;
a light scanner adapted to perform a scan with the light beam emitted by the light source section; and
a switching section disposed between the light source section and the light scanner, and adapted to switch between a first state of making the light beam emitted by the light source section enter the light scanner, and a second state of preventing the light beam emitted by the light source section from entering the light scanner,
wherein the switching section takes the first state in a case in which a voltage is applied to the switching section, and takes the second state in a case in which the voltage fails to be applied to the switching section.
